# EUROPÄISCHE PATENTSCHRIFT

(11) **EP 4 569 659 B1**
(45) Veröffentlichungstag und Bekanntmachung des Hinweises auf die Patenterteilung: **17.06.2026**
(21) Anmeldenummer: 23744725.5
(22) Anmeldetag: 18.07.2023
(51) Int. Cl.: H04B 10/114, H04B 10/69

(54) **VERFAHREN ZUR BESTIMMUNG EINER PASSENDEN ZEILENABTASTFREQUENZ UND SYSTEM ZUR LICHTÜBERTRAGUNG**
METHOD FOR DETERMINING A SUITABLE LINE SCANNING FREQUENCY AND SYSTEM FOR TRANSMITTING LIGHT
PROCÉDÉ DE DÉTERMINATION D'UNE FRÉQUENCE DE BALAYAGE DE LIGNE APPROPRIÉE ET SYSTÈME DE TRANSMISSION DE LUMIÈRE

(30) Priorität: 10.08.2022 DE 102022002898
(43) Veröffentlichungstag der Anmeldung: 18.06.2025
(73) Patentinhaber: SEW-EURODRIVE GmbH & Co. KG, 76646 Bruchsal (DE)
(72) Erfinder: SCHMIDT, Josef, 76661 Philippsburg - Huttenheim (DE); HUA, Zhidong, 76646 Bruchsal (DE); SCHÄFER, Thomas, 76689 Karlsdorf-Neuthard (DE); VON SCHOETTLER FRANCESCHI, Frank Stephan, 76137 Karlsruhe (DE)
(86) Internationale Anmeldenummer: PCT/EP2023/069881
(87) Internationale Veröffentlichungsnummer: WO 2024/033028

(56) Entgegenhaltungen:
- DE-A1- 102015 015 898
- DE-A1- 102021 001 049
- DE-B3- 102019 007 311
- US-A1- 2008 122 607

## Beschreibung

Die Erfindung betrifft ein Verfahren zur Bestimmung einer passenden Zeilenabtastfrequenz eines Empfängers beim Empfang eines von einem Sender ausgesendeten Lichtsignals, wobei der Sender das Lichtsignal mit einer annähernd konstanten Schaltfrequenz sendet, und der Empfänger Bilder des Lichtsignals mit einer konstanten Zeilengrundfrequenz aufnimmt. Die Erfindung betrifft auch ein System zur Lichtübertragung, welches mit dem erfindungsgemäßen Verfahren betreibbar ist.

Aus der DE 10 2018 006 988 B3 sind ein System und ein Verfahren zur Datenübertragung mittels sichtbarem Licht bekannt. Das System weist einen Empfänger mit einem Bildsensor, dessen lichtsensitive Fläche zeilenweise abgetastet wird, und einen Sender mit einem steuerbaren Leuchtmittel, welches moduliertes Licht abstrahlt, auf. Dabei weist der Empfänger eine Lentikularfolie oder ein Zylinderlinsenarray auf, welche zwischen einer Linse des Empfängers und dem Sender angeordnet ist. Ein auf die lichtsensitive Fläche des Bildsensors projiziertes Bild ist dabei unscharf abgebildet. Durch Ausnutzung des Rolling-Shutter-Effekts des Bildsensors wird eine erhöhte Datenübertragungsrate erzielt.

Aus der DE 10 2021 001 049 A1 sind ebenfalls ein System zur Lichtübertragung und ein Verfahren zum Betrieb des Systems bekannt. Eine punktförmige Lichtquelle sendet einen Lichtstrahl auf profilierte Bereiche einer Folie, wobei der Lichtstrahl in Form eines Leuchtstreifens abgebildet wird. Durch eine zeilenweise Abtastung des Empfängers ist aus dem Leuchtstreifen ein Datenstrom detektierbar.

Aus der DE 10 2019 007 311 B3 sind ebenfalls ein System zur Lichtübertragung und ein Verfahren zum Betrieb des Systems bekannt.

Aus der US 2015/195042 A1 sind ein System und ein Verfahren zur Datenübertragung mittels Lichtsignalen bekannt. Dabei wird Licht von einem Sender, der mehrere LEDs aufweist, zu einem Empfänger übertragen, der mehrere Sensoren aufweist.

Aus der EP 2 940 902 A1 ist ein drahtloses Informationskommunikationsverfahren des Übermittelns eines Signals unter Verwendung einer Luminanzänderung von sichtbarem Licht bekannt.

Aus der DE 10 2015 015 898 A1 sind ein Verfahren zur Datenübertragung zwischen einem Sender und einem Empfänger sowie ein System zur Durchführung des Verfahrens bekannt. Dabei ist eine Bildrate synchron zu einem Belichtungssignal.

Aus der US 2008/0122607 A1 sind ein System und ein Verfahren zur Kommunikation mit Fahrzeugen bekannt. Dabei werden von einem Generator Datenströme erzeugt und zu einem Empfänger übertragen.

Der Erfindung liegt die Aufgabe zugrunde, ein Verfahren zur Bestimmung einer passenden Zeilenabtastfrequenz eines Empfängers beim Empfang eines von einem Sender ausgesendeten Lichtsignals sowie ein mit dem Verfahren betreibbares System zur Lichtübertragung anzugeben.

Die Aufgabe wird durch ein Verfahren mit den in Anspruch 1 angegebenen Merkmalen gelöst. Vorteilhafte Ausgestaltungen und Weiterbildungen sind Gegenstand der Unteransprüche. Die Aufgabe wird auch durch ein System zur Lichtübertragung mit den in Anspruch 11 angegebenen Merkmalen gelöst.

Bei einem erfindungsgemäßen Verfahren zur Bestimmung einer passenden Zeilenabtastfrequenz eines Empfängers beim Empfang eines von einem Sender ausgesendeten Lichtsignals sendet der Sender das Lichtsignal mit einer annähernd konstanten Schaltfrequenz. Der Empfänger nimmt Bilder des Lichtsignals mit einer konstanten Zeilengrundfrequenz auf, wobei zwei benachbarte Zeilen eines Bildes um eine Grundabtastzeit nacheinander aufgenommen werden. Die Grundabtastzeit ist dabei der Kehrwert der Zeilengrundfrequenz.

Das erfindungsgemäße Verfahren umfasst die folgenden Schritte:
- Aufnehmen einer Bildanzahl von Bildern des Lichtsignals mit der Zeilengrundfrequenz, wobei jedes der aufgenommenen Bilder eine gleiche Spaltenanzahl von Spalten und eine gleiche Zeilenanzahl von Zeilen aufweist;
- Auswählen einer Spalte aus jedem der aufgenommenen Bilder;
- Zusammensetzen der ausgewählten Spalten zu einer Matrix, welche die Bildanzahl von Spalten und die Zeilenanzahl von Zeilen aufweist;
- Bestimmen eines Punktes mit maximaler Lichtintensität in jeder Zeile der Matrix;
- Bestimmen eines Punktes mit minimaler Lichtintensität in jeder Zeile der Matrix;
- Auswählen einer Spalte der Matrix, wobei je zwei benachbarte Punkte in der Spalte um die Grundabtastzeit zueinander versetzt sind;
- für jeden Punkt der ausgewählten Spalte:
   Bestimmen einer oberen Abweichung der Lichtintensität des Punktes von der maximalen Lichtintensität der zugehörigen Zeile;
   Bestimmen einer unteren Abweichung der Lichtintensität des Punktes von der minimalen Lichtintensität der zugehörigen Zeile;
   Bestimmen eines Minimums aus der oberen Abweichung und der unteren Abweichung; Zuordnen des Minimums zu dem Punkt;
- Berechnen eines relativen Fehlers in der ausgewählten Spalte für mehrere Abtastzeiten; wobei jede Abtastzeit ein ganzzahliges Vielfaches der Grundabtastzeit ist; wobei in der ausgewählten Spalte ein Startpunkt gewählt wird; der relative Fehler als Mittelwert der Minima, welche dem Startpunkt und allen zu dem Startpunkt um ein ganzzahliges Vielfaches der Grundabtastzeit versetzten Punkte zugeordnet sind, berechnet wird;
- Auswahl derjenigen Abtastzeit mit dem geringsten relativen Fehler, wobei die passende Zeilenabtastfrequenz der Kehrwert der ausgewählten Abtastzeit ist.

Die Zeilengrundfrequenz des Empfängers ist in der Regel deutlich größer als die Schaltfrequenz des Senders. Der Empfänger nimmt somit redundante Daten auf. Optimal nimmt der Empfänger Bilder mit einer Zeilenabtastfrequenz auf, welche der Schaltfrequenz des Senders entspricht. Die durch das erfindungsgemäße Verfahren bestimmte passende Zeilenabtastfrequenz entspricht dabei zumindest annähernd der Schaltfrequenz des Senders.

Die Schaltfrequenz des Senders ist dem Empfänger nicht exakt, sondern nur näherungsweise bekannt. Gemäß einer vorteilhaften Ausgestaltung der Erfindung ist die Zeilengrundfrequenz größer als die Schaltfrequenz. Vorzugsweise ist die Zeilengrundfrequenz mindestens doppelt so groß wie die Schaltfrequenz; besonders vorzugsweise ist die Zeilengrundfrequenz mindestens viermal so groß wie die Schaltfrequenz.

Die Schaltfrequenz beträgt beispielsweise etwa 5 kHz. Die Zeilengrundfrequenz des Empfängers beträgt beispielsweise 45 kHz und ist in diesem Fall neunmal so groß wie die Schaltfrequenz. Die Grundabtastzeit ist der Kehrwert der Zeilengrundfrequenz und beträgt beispielsweise 1/45.000 sec. Die Zeilenanzahl ist beispielsweise 1.080. Bei dem ganzzahligen Vielfachen der Grundabtastzeit, um welche die Punkte zu dem Startpunkt versetzt sind, handelt es sich beispielsweise um Zahlen zwischen 6 und 12.

Gemäß einer vorteilhaften Weiterbildung der Erfindung werden die Schritte:
- Auswählen einer Spalte der Matrix (M);
- für jeden Punkt der ausgewählten Spalte:
   Bestimmen einer oberen Abweichung der Lichtintensität des Punktes von der maximalen Lichtintensität der zugehörigen Zeile;
   Bestimmen einer unteren Abweichung der Lichtintensität des Punktes von der minimalen Lichtintensität der zugehörigen Zeile;
   Bestimmen eines Minimums aus der oberen Abweichung und der unteren Abweichung; Zuordnen des Minimums zu dem Punkt;
- Berechnen eines relativen Fehlers in der ausgewählten Spalte für mehrere Abtastzeiten; wobei jede Abtastzeit ein ganzzahliges Vielfaches der Grundabtastzeit ist; wobei der relative Fehler als Mittelwert der Minima, welche einem Startpunkt und allen zu dem Startpunkt um ein ganzzahliges Vielfaches der Abtastzeit versetzten Punkte zugeordnet sind, berechnet wird;
für jede Spalte der Matrix wiederholt.

Falls dabei verschiedene passende Zeilenabtastfrequenzen in unterschiedliche Spalten bestimmt werden, so wird beispielsweise diejenige Zeilenabtastfrequenz ausgewählt, die am häufigsten ermittelt wurde.

Gemäß einer vorteilhaften Weiterbildung der Erfindung umfasst das Verfahren zusätzlich die folgenden Schritte:
- Auswählen einer Spalte der Matrix;
- Berechnen eines relativen Fehlers in der ausgewählten Spalte für mehrere Startpunkte; wobei der relative Fehler als Mittelwert der Minima, welche dem jeweiligen Startpunkt und allen zu dem Startpunkt um ein ganzzahliges Vielfaches der ausgewählten Abtastzeit versetzten Punkte zugeordnet sind, berechnet wird;
- Auswahl des Startpunktes mit dem geringsten relativen Fehler.

Damit wird die optimale Phasenlage ermittelt.

Gemäß einer vorteilhaften Weiterbildung der Erfindung werden die Schritte:
- Berechnen eines relativen Fehlers in der ausgewählten Spalte für mehrere Startpunkte; wobei
   der relative Fehler als Mittelwert der Minima, welche dem jeweiligen Startpunkt und allen zu dem Startpunkt um ein ganzzahliges Vielfaches der ausgewählten Abtastzeit versetzten Punkte zugeordnet sind, berechnet wird;
- Auswahl des Startpunktes mit dem geringsten relativen Fehler;
für jede Spalte der Matrix wiederholt.

Damit wird die optimale Phasenlage für jede Spalte der Matrix und damit für jedes der aufgenommenen Bilder, ermittelt.

Damit wird die optimale Phasenlage für jede Spalte der Matrix ermittelt.

Gemäß einer bevorzugten Ausgestaltung der Erfindung umfasst der Empfänger eine Kamera, welche einen Bildsensor aufweist, wobei eine lichtsensitive Fläche des Bildsensors die Zeilenanzahl von Zeilen mit lichtsensitiven Elementen umfasst, wobei die lichtsensitive Fläche des Bildsensors zeilenweise mit der Zeilengrundfrequenz abgetastet wird, und ein Vorsatzelement, welches in Form einer Folie ausgebildet ist, und welches derart angeordnet ist, dass auf die lichtsensitive Fläche des Bildsensors auftreffendes Licht zuvor das Vorsatzelement passiert.

Gemäß einer bevorzugten Ausgestaltung der Erfindung weist das Vorsatzelement mindestens einen lentikularen Bereich auf, wobei der lentikulare Bereich eine alternierende Materialstärke aufweist.

Gemäß einer vorteilhaften Ausgestaltung der Erfindung weist Vorsatzelement eine Mehrzahl von streifenförmigen lentikularen Bereichen und eine Mehrzahl von streifenförmigen planaren Bereichen auf, wobei die lentikularen Bereiche eine alternierende Materialstärke aufweisen, und die planaren Bereiche eine konstante Materialstärke aufweisen.

Gemäß einer vorteilhaften Ausgestaltung der Erfindung weisen die lentikularen Bereiche Vertiefungen und eine geringere Materialstärke auf als die planaren Bereiche.

Gemäß einer anderen vorteilhaften Ausgestaltung der Erfindung weisen die lentikularen Bereiche Erhebungen und eine größere Materialstärke auf als die planaren Bereiche.

Ein erfindungsgemäßes System zur Lichtübertragung umfasst einen Sender, welcher mindestens eine steuerbare Lichtquelle aufweist, welche ein entsprechend einem vorgegebenen Datenstrom moduliertes Lichtsignal abstrahlt, und einen Empfänger zum Empfang des von dem Sender ausgesendeten Lichtsignals. Dabei ist das erfindungsgemäße System mit dem erfindungsgemäßen Verfahren betreibbar. Insbesondere wird das erfindungsgemäße System mit dem erfindungsgemäßen Verfahren betrieben.

Die Lichtquelle strahlt dabei ein entsprechend einem vorgegebenen Datenstrom moduliertes Lichtsignal einer konstanten Trägerfrequenz von beispielsweise 5 kHz ab. Die Schaltfrequenz weicht dabei, bedingt durch die Modulation, von der konstanten Trägerfrequenz von beispielsweise 5 kHz geringfügig ab. Der Sender sendet somit ein Lichtsignal mit einer annähernd konstanten Schaltfrequenz aus.

Die Erfindung wird nun anhand von Abbildungen näher erläutert. Die Erfindung ist nicht auf die in den Abbildungen dargestellten Ausführungsbeispiele beschränkt. Die Abbildungen stellen den Gegenstand der Erfindung nur schematisch dar. Es zeigen:
- Figur 1:: eine schematische Darstellung eines Systems zur Lichtübertragung und
- Figur 2:: eine schematische Darstellung einer Matrix.

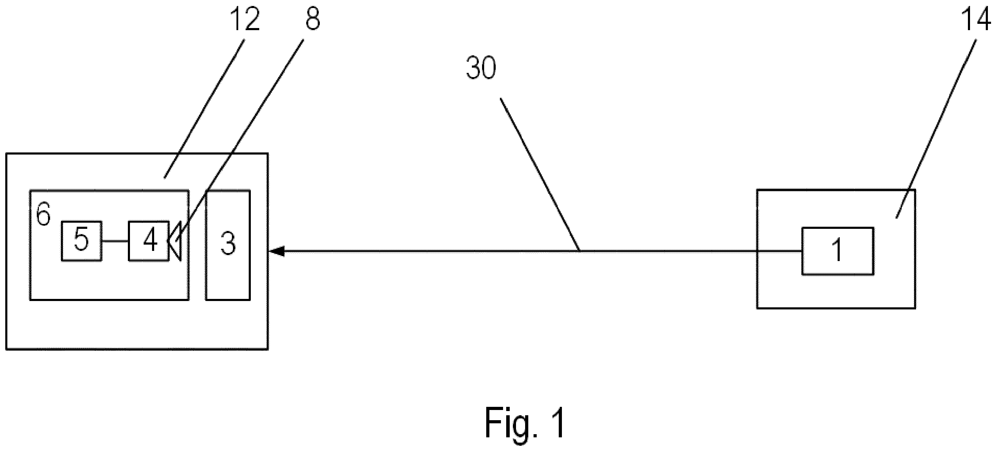

Figur 1 zeigt eine schematische Darstellung eines Systems zur Lichtübertragung. Das System zur Lichtübertragung umfasst einen Sender 14, welcher eine steuerbare Lichtquelle 1 aufweist. Bei der Lichtquelle 1 handelt es sich beispielsweise um eine LED, eine Deckenlampe oder einen Scheinwerfer eines Fahrzeugs.

Die Lichtquelle 1 strahlt ein entsprechend einem vorgegebenen Datenstrom moduliertes Lichtsignal 30 mit einer annähernd konstanten Schaltfrequenz von beispielsweise 5 kHz ab. Die Schaltfrequenz weicht dabei, bedingt durch die Modulation, von einer konstanten Trägerfrequenz von beispielsweise 5 kHz geringfügig ab. Der Sender 14 sendet somit ein Lichtsignal mit der besagten Schaltfrequenz aus.

Das System zur Lichtübertragung umfasst ferner einen Empfänger 12. Der Empfänger 12 umfasst eine Kamera 6. Die Kamera 6 weist einen Bildsensor 4 auf. Der Bildsensor 4 weist eine lichtsensitive Fläche auf, welche eine Zeilenanzahl K von Zeilen und eine Spaltenanzahl J von Spalten von lichtsensitiven Elementen umfasst. Im Betrieb der Kamera 6 wird die lichtsensitive Fläche des Bildsensors 4 zeilenweise mit einer Zeilengrundfrequenz abgetastet. Die Zeilengrundfrequenz des Empfängers 12 beträgt beispielsweise 45 kHz und ist in diesem Fall neunmal so groß wie die Schaltfrequenz des Senders. Die einzelnen abgetasteten Zeilen werden anschließend zu einem Bild zusammengesetzt.

Die Kamera 6 umfasst ferner ein optisches Element in Form einer optischen Linse 8. Die Linse 8 ist dabei vor dem Bildsensor 4 angeordnet, so dass Licht, welches auf die lichtsensitive Fläche des Bildsensors 4 auftrifft, zuvor die Linse 8 passiert. Die Kamera 6 umfasst auch eine Signalelektronik 5, welche insbesondere zum Abtasten der lichtsensitiven Fläche des Bildsensors 4 dient.

Der Empfänger 12 umfasst auch ein Vorsatzelement 3. Das Vorsatzelement 3 ist derart vor dem Bildsensor 4 angeordnet, dass Licht, welches auf die lichtsensitive Fläche des Bildsensors 4 auftrifft, zuvor das Vorsatzelement 3 passiert. Das Vorsatzelement 3 ist in Form einer verhältnismäßig dünnen, lichtdurchlässigen Folie ausgebildet. Das Vorsatzelement 3 ist zwischen der Lichtquelle 1 des Senders 14 und der Kamera 6 angeordnet.

Die Kamera 6 des Empfängers 12 ist beispielsweise Teil eines handelsüblichen Mobiltelefons oder Smartphones. Der Empfänger 12 umfasst optional auch eine Aufnahmeeinheit. Die Aufnahmeeinheit ist beispielsweise ein Etui, welches ein erstes Aufnahmeelement und ein zweites Aufnahmeelement aufweist. Dabei ist das zweite Aufnahmeelement relativ zu dem ersten Aufnahmeelement bewegbar, insbesondere schwenkbar. Das Mobiltelefon mit der Kamera 6 ist in dem ersten Aufnahmeelement aufgenommen, und das Vorsatzelement 3 ist in dem zweiten Aufnahmeelement aufgenommen. Somit ist das Vorsatzelement 3 relativ zu der Kamera 6 bewegbar, beispielsweise schwenkbar oder verschiebbar. Wenn keine Datenübertragung über das System 10 gewünscht ist, so kann das Vorsatzelement 3 von der Kamera 6 entfernt werden, und die Kamera kann ein vollständiges optisches Bild ohne das Vorsatzelement 3 aufnehmen.

Das Vorsatzelement 3 weist eine Mehrzahl von streifenförmigen lentikularen Bereichen und eine Mehrzahl von streifenförmigen planaren Bereichen auf. Die streifenförmigen lentikularen Bereiche und planaren Bereiche sind parallel zueinander orientiert.

Die planaren Bereiche des Vorsatzelements 3 sind derart ausgebildet, dass Licht, welches die planaren Bereiche passiert, das Vorsatzelement 3 zumindest annährend geradlinig durchdringt, also nicht oder nur unwesentlich gebrochen wird. Die planaren Bereiche des Vorsatzelements 3 weisen eine zumindest annähernd konstante Materialstärke auf. Licht, welches die planaren Bereiche des Vorsatzelements 3 passiert, erzeugt ein zweites Bild auf der lichtsensitiven Fläche des Bildsensors 4. Das zweite Bild ist ein scharfes optisches Bild.

Die lentikularen Bereiche des Vorsatzelements 3 sind derart ausgebildet, dass Licht, welches die lentikularen Bereiche passiert, verhältnismäßig stark gebrochen wird. Insbesondere wird dabei ein Lichtstrahl, welcher von der punktförmigen Lichtquelle 1 stammt, in Form eines Leuchtstreifens abgebildet. Licht, welches die lentikularen Bereiche des Vorsatzelements 3 passiert, erzeugt ein erstes Bild auf der lichtsensitiven Fläche des Bildsensors 4. Das erste Bild ist aufgrund der verhältnismäßig starken Brechung des Lichts unscharf.

Die lentikularen Bereiche des Vorsatzelements 3 weisen eine alternierende Materialstärke auf. Beispielsweise weisen die lentikularen Bereiche konkave Vertiefungen und somit eine geringere Materialstärke als die planaren Bereiche auf. Beispielsweise weisen die lentikularen Bereiche konvexe Erhebungen und somit eine größere Materialstärke als die planaren Bereiche auf. Die Erhebungen oder die Vertiefungen der lentikularen Bereiche weisen beispielsweise einen jeweils annähernd halbkreisförmigen Querschnitt auf. Auf die lentikularen Bereiche auftreffendes Licht wird somit in Abhängigkeit von der Stelle des Auftreffens unterschiedlich stark gebrochen.

Bei der Durchführung des Verfahrens sendet der Sender 14 ein Lichtsignal 30 mit der annähernd konstanten Schaltfrequenz. Der Empfänger 12 nimmt eine Bildanzahl N von Bildern des Lichtsignals 30 mit der konstanten Zeilengrundfrequenz auf. Jedes der aufgenommenen Bilder weist die gleiche Spaltenanzahl J von Spalten und die gleiche Zeilenanzahl K von Zeilen auf. Zwei benachbarte Zeilen eines Bildes werden dabei um eine Grundabtastzeit nacheinander aufgenommen. Die Grundabtastzeit ist der Kehrwert der Zeilengrundfrequenz.

Aus jedem der aufgenommenen Bilder wird eine der Spalten ausgewählt. Es wird dabei diejenige Spalte ausgewählt, welche den Leuchtstreifen, welcher von der punktförmigen Lichtquelle 1 über das Vorsatzelement 3 erzeugt wird, am deutlichsten darstellt. In der Regel wird der besagte Leuchtstreifen in jedem der Bilder in der gleichen Spalte am deutlichsten dargestellt. Somit wird in jedem Bild die gleiche Spalte ausgewählt.

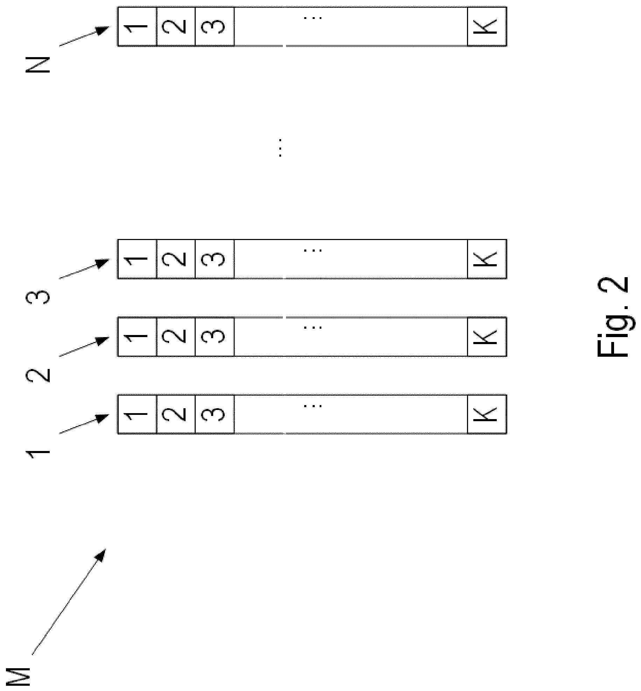

Die ausgewählten Spalten der Bilder werden zu einer Matrix M zusammengesetzt. Figur 2 zeigt eine schematische Darstellung einer solchen Matrix M. Die Matrix M weist die Bildanzahl N von Spalten und die Zeilenanzahl K von Zeilen auf. Jede Zeile der Matrix M weist somit die Bildanzahl N von Punkten auf. Jede Spalte der Matrix M weist somit die Zeilenanzahl K von Punkten auf. In jeder Spalte der Matrix M sind je zwei benachbarte Punkte um die Grundabtastzeit zueinander versetzt. Jeder der Punkte der Matrix M weist eine Lichtintensität auf.

In jeder Zeile der Matrix M wird derjenige Punkt bestimmt, welcher in der Zeile eine maximale Lichtintensität Dmax aufweist. Auch wird in jeder Zeile der Matrix M derjenige Punkt bestimmt, welcher in der Zeile eine minimale Lichtintensität Dmin aufweist.

Es wird eine beliebige Spalte der Matrix M ausgewählt, beispielsweise die erste Spalte. Für jeden Punkt der ausgewählten Spalte wird eine obere Abweichung der Lichtintensität des Punktes von der maximalen Lichtintensität Dmax der zugehörigen Zeile bestimmt. Für jeden Punkt der ausgewählten Spalte wird auch eine untere Abweichung der Lichtintensität des Punktes von der minimalen Lichtintensität Dmin der zugehörigen Zeile bestimmt. Anschließend wird für jeden Punkt der ausgewählten Spalte ein Minimum aus der oberen Abweichung und der unteren Abweichung bestimmt. Das Minimum wird dem Punkt zugeordnet.

Die Abweichung der Lichtintensität des Punktes von der maximalen Lichtintensität Dmax wird beispielsweise als Betrag der Differenz aus der Lichtintensität des Punktes und der maximalen Lichtintensität Dmax berechnet. Alternativ wird die Abweichung der Lichtintensität des Punktes von der maximalen Lichtintensität Dmax beispielsweise als Quadrat der Differenz aus der Lichtintensität des Punktes und der maximalen Lichtintensität Dmax berechnet.

Die Abweichung der Lichtintensität des Punktes von der minimalen Lichtintensität Dmin wird beispielsweise als Betrag der Differenz aus der Lichtintensität des Punktes und der minimalen Lichtintensität Dmin berechnet. Alternativ wird die Abweichung der Lichtintensität des Punktes von der minimalen Lichtintensität Dmin beispielsweise als Quadrat der Differenz aus der Lichtintensität des Punktes und der minimalen Lichtintensität Dmin berechnet.

Anschließend wird in der ausgewählten Spalte für mehrere Abtastzeiten jeweils ein relativer Fehler berechnet. Dabei ist jede Abtastzeit ein ganzzahliges Vielfaches der Grundabtastzeit. Dazu wird in der ausgewählten Spalte ein Startpunkt gewählt. Der Startpunkt ist beispielsweise der erste Punkt in der Spalte.

Der relative Fehler einer Abtastzeit wird dabei als Mittelwert der Minima, welche dem Startpunkt und allen zu dem Startpunkt um ein ganzzahliges Vielfaches der Grundabtastzeit versetzten Punkte zugeordnet sind, berechnet. Bei dem ganzzahligen Vielfachen der Grundabtastzeit, um welche die Punkte zu dem Startpunkt versetzt sind, handelt es sich beispielsweise um Zahlen zwischen 6 und 12. So wird beispielsweise bei der Berechnung des Mittelwerts der Minima der Startpunkt und jeder sechste darauf folgende Punkt berücksichtigt. Die dazwischen liegenden Punkte werden nicht berücksichtigt.

Die berechneten relativen Fehler der Abtastzeiten werden miteinander verglichen. Es wird diejenige Abtastzeit ausgewählt, welche den geringsten relativen Fehler aufweist. Die passende Zeilenabtastfrequenz ist dann der Kehrwert der ausgewählten Abtastzeit. So wird die passende Zeilenabtastfrequenz des Empfängers 12 beim Empfang eines von einem Sender 14 ausgesendeten Lichtsignals 30 bestimmt.

Wie oben beschrieben wurde zur Bestimmung der passenden Zeilenabtastfrequenz eine beliebige Spalte der Matrix M ausgewählt, beispielsweise die erste Spalte. Es ist denkbar, dass die oben beschriebenen Schritte zur Bestimmung der passenden Zeilenabtastfrequenz für mehrere Spalten der Matrix M, beispielsweise für alle Spalten der Matrix M, wiederholt werden. Falls dabei verschiedene passende Zeilenabtastfrequenzen in unterschiedliche Spalten bestimmt werden, so wird beispielsweise diejenige Zeilenabtastfrequenz ausgewählt, die am häufigsten ermittelt wurde.

Nach der Bestimmung der passenden Zeilenabtastfrequenz wird zusätzlich die optimale Phasenlage innerhalb einer Spalte ermittelt. Dazu wird eine Spalte der Matrix M ausgewählt. In der ausgewählten Spalte wird für mehrere Startpunkte jeweils ein relativer Fehler berechnet. Dabei wird der relative Fehler als Mittelwert der Minima, welche dem jeweiligen Startpunkt und allen zu dem Startpunkt um ein ganzzahliges Vielfaches der ausgewählten Abtastzeit versetzten Punkte zugeordnet sind, berechnet. Es wird derjenige Startpunkt mit dem geringsten relativen Fehler ausgewählt.

Die optimale Phasenlage wird vorzugsweise in jeder Spalte ermittelt. Dazu werden die oben angegebenen Schritte für jede Spalte der Matrix M wiederholt.

### Bezugszeichenliste

- 1: Lichtquelle
- 3: Vorsatzelement
- 4: Bildsensor
- 5: Signalelektronik
- 6: Kamera
- 8: Linse
- 12: Empfänger
- 14: Sender
- 30: Lichtsignal
- M: Matrix
- N: Bildanzahl
- J: Spaltenanzahl
- K: Zeilenanzahl
- Dmax: maximale Lichtintensität
- Dmin: minimale Lichtintensität

## Patentansprüche

1. Verfahren zur Bestimmung einer passenden Zeilenabtastfrequenz
eines Empfängers (12) beim Empfang eines von einem Sender (14) ausgesendeten Lichtsignals (30), wobei
der Sender (14) das Lichtsignal (30) mit einer annähernd konstanten Schaltfrequenz sendet, und
der Empfänger (12) Bilder des Lichtsignals (30) mit einer konstanten Zeilengrundfrequenz aufnimmt, wobei
zwei benachbarte Zeilen eines Bildes um eine Grundabtastzeit nacheinander aufgenommen werden, wobei
die Grundabtastzeit der Kehrwert der Zeilengrundfrequenz ist;
umfassend die folgenden Schritte:
Aufnehmen einer Bildanzahl (N) von Bildern des Lichtsignals (30) mit der Zeilengrundfrequenz, wobei
jedes der aufgenommenen Bilder eine gleiche Spaltenanzahl (J) von Spalten und eine gleiche Zeilenanzahl (K) von Zeilen aufweist;
Auswählen einer Spalte aus jedem der aufgenommenen Bilder;
Zusammensetzen der ausgewählten Spalten zu einer Matrix (M),
welche die Bildanzahl (N) von Spalten und die Zeilenanzahl (K) von Zeilen aufweist;
Bestimmen eines Punktes mit maximaler Lichtintensität (Dmax) in jeder Zeile der Matrix (M);
Bestimmen eines Punktes mit minimaler Lichtintensität (Dmin) in jeder Zeile der Matrix (M);
Auswählen einer Spalte der Matrix (M), wobei
je zwei benachbarte Punkte in der Spalte um die Grundabtastzeit zueinander versetzt sind;
für jeden Punkt der ausgewählten Spalte:
Bestimmen einer oberen Abweichung der Lichtintensität des Punktes von der maximalen Lichtintensität (Dmax) der zugehörigen Zeile;
Bestimmen einer unteren Abweichung der Lichtintensität des Punktes von der minimalen Lichtintensität (Dmin) der zugehörigen Zeile;
Bestimmen eines Minimums aus der oberen Abweichung und der unteren Abweichung; Zuordnen des Minimums zu dem Punkt;
Berechnen eines relativen Fehlers in der ausgewählten Spalte für mehrere Abtastzeiten; wobei jede Abtastzeit ein ganzzahliges Vielfaches der Grundabtastzeit ist; wobei
in der ausgewählten Spalte ein Startpunkt gewählt wird;
der relative Fehler als Mittelwert der Minima, welche dem Startpunkt und allen zu dem Startpunkt um ein ganzzahliges Vielfaches der Grundabtastzeit versetzten Punkte zugeordnet sind, berechnet wird;
Auswahl derjenigen Abtastzeit mit dem geringsten relativen Fehler, wobei die passende Zeilenabtastfrequenz der Kehrwert der ausgewählten Abtastzeit ist.

2. Verfahren nach Anspruch 1, wobei
die Zeilengrundfrequenz größer ist als die Schaltfrequenz,
vorzugsweise mindestens doppelt so groß,
besonders vorzugsweise mindestens viermal so groß.

3. Verfahren nach einem der vorangegangenen Ansprüche, wobei
die Schritte:
Auswählen einer Spalte der Matrix (M);
für jeden Punkt der ausgewählten Spalte:
Bestimmen einer oberen Abweichung der Lichtintensität des Punktes von der maximalen Lichtintensität (Dmax) der zugehörigen Zeile;
Bestimmen einer unteren Abweichung der Lichtintensität des Punktes von der minimalen Lichtintensität (Dmin) der zugehörigen Zeile;
Bestimmen eines Minimums aus der oberen Abweichung und der unteren Abweichung; Zuordnen des Minimums zu dem Punkt;
Berechnen eines relativen Fehlers in der ausgewählten Spalte für mehrere Abtastzeiten; wobei jede Abtastzeit ein ganzzahliges Vielfaches der Grundabtastzeit ist; wobei der relative Fehler als Mittelwert der Minima, welche einem Startpunkt und allen zu dem Startpunkt um ein ganzzahliges Vielfaches der Abtastzeit versetzten Punkte zugeordnet sind, berechnet wird;
für jede Spalte der Matrix (M) wiederholt werden.

4. Verfahren nach einem der vorangegangenen Ansprüche,
umfassend die folgenden Schritte:
Auswählen einer Spalte der Matrix (M);
Berechnen eines relativen Fehlers in der ausgewählten Spalte für mehrere Startpunkte; wobei der relative Fehler als Mittelwert der Minima, welche dem jeweiligen Startpunkt und allen zu dem Startpunkt um ein ganzzahliges Vielfaches der ausgewählten Abtastzeit versetzten Punkte zugeordnet sind, berechnet wird;
Auswahl des Startpunktes mit dem geringsten relativen Fehler.

5. Verfahren nach Anspruch 4, wobei
die Schritte:
Berechnen eines relativen Fehlers in der ausgewählten Spalte für mehrere Startpunkte; wobei der relative Fehler als Mittelwert der Minima, welche dem jeweiligen Startpunkt und allen zu dem Startpunkt um ein ganzzahliges Vielfaches der ausgewählten Abtastzeit versetzten Punkte zugeordnet sind, berechnet wird;
Auswahl des Startpunktes mit dem geringsten relativen Fehler;
für jede Spalte der Matrix (M) wiederholt werden.

6. Verfahren nach einem der vorangegangenen Ansprüche, wobei
der Empfänger (12)
eine Kamera (6), welche einen Bildsensor (4) aufweist, wobei
eine lichtsensitive Fläche des Bildsensors (4) die Zeilenanzahl (K) von Zeilen mit lichtsensitiven Elementen umfasst, wobei
die lichtsensitive Fläche des Bildsensors (4) zeilenweise mit der Zeilengrundfrequenz abgetastet wird, und
ein Vorsatzelement (3), welches in Form einer Folie ausgebildet ist, und welches derart angeordnet ist,
dass auf die lichtsensitive Fläche des Bildsensors (4) auftreffendes Licht zuvor das Vorsatzelement (3) passiert, umfasst.

7. Verfahren nach Anspruch 6, wobei
das Vorsatzelement (3) mindestens einen lentikularen Bereich aufweist, wobei der lentikulare Bereich eine alternierende Materialstärke aufweist.

8. Verfahren nach Anspruch 6, wobei
Vorsatzelement (3) eine Mehrzahl von streifenförmigen lentikularen Bereichen und
eine Mehrzahl von streifenförmigen planaren Bereichen aufweist, wobei
die lentikularen Bereiche eine alternierende Materialstärke aufweisen, und
die planaren Bereiche eine konstante Materialstärke aufweisen.

9. Verfahren nach Anspruch 8, wobei
die lentikularen Bereiche Vertiefungen und eine geringere Materialstärke aufweisen als die planaren Bereiche.

10. Verfahren nach Anspruch 8, wobei
die lentikularen Bereiche Erhebungen und eine größere Materialstärke aufweisen als die planaren Bereiche.

11. System zur Lichtübertragung, umfassend
einen Sender (14), welcher mindestens eine steuerbare Lichtquelle (1) aufweist,
welche ein entsprechend einem vorgegebenen Datenstrom moduliertes Lichtsignal (30) abstrahlt, und
einen Empfänger (12) zum Empfang des von dem Sender (14) ausgesendeten Lichtsignals (30), wobei
das System mit dem Verfahren nach einem der vorangegangenen Ansprüche betrieben wird.

## Claims

1. Method for determining a suitable row scanning frequency of a receiver (12) during receipt of a light signal (30) emitted by a transmitter (14), wherein
the transmitter (14) emits the light signal (30) at an approximately constant switching frequency, and
the receiver (12) registers images of the light signal (30) at a constant row base frequency, wherein
two adjacent rows of an image are registered one after the other at a base scanning time, wherein
the base scanning time is the reciprocal of the row base frequency;
said method comprising the following steps:
registering an image count (N) of images of the light signal (30) at the row base frequency, wherein
each of the registered images has an identical column count (J) of columns and an identical row count (K) of rows;
selecting one column from each of the registered images;
compiling the selected columns into a matrix (M) that has the image count (N) of columns and the row count (K) of rows;
determining a point of maximum light intensity (Dmax) in each row of the matrix (M);
determining a point of minimum light intensity (Dmin) in each row of the matrix (M);
selecting one column of the matrix (M), wherein
each two adjacent points in the column are shifted with respect to one another by the base scanning time;
for each point of the selected column:
determining an upper deviation of the light intensity of the point from the maximum light intensity (Dmax) of the associated row;
determining a lower deviation of the light intensity of the point from the minimum light intensity (Dmin) of the associated row;
determining a minimum out of the upper deviation and the lower deviation;
assigning the minimum to the point;
calculating a relative error in the selected column for a plurality of scanning times; wherein each scanning time is an integer multiple of the base scanning time; wherein
a starting point is selected in the selected column;
the relative error is calculated as an average of the minimums that are assigned to the starting point and to all the points shifted with respect to the starting point by an integer multiple of the base scanning time;
selecting the scanning time that has the lowest relative error, wherein the suitable row scanning frequency is the reciprocal of the selected scanning time.

2. Method according to claim 1, wherein
the row base frequency is greater, preferably at least two times greater, particularly preferably at least four times greater, than the switching frequency.

3. Method according to any of the preceding claims, wherein the steps of:
selecting one column of the matrix (M),
for each point of the selected column:
determining an upper deviation of the light intensity of the point from the maximum light intensity (Dmax) of the associated row;
determining a lower deviation of the light intensity of the point from the minimum light intensity (Dmin) of the associated row;
determining a minimum out of the upper deviation and the lower deviation;
assigning the minimum to the point;
calculating a relative error in the selected column for a plurality of scanning times; wherein
each scanning time is an integer multiple of the base scanning time; wherein
the relative error is calculated as an average of the minimums that are assigned to a starting point and to all the points shifted with respect to the starting point by an integer multiple of the scanning time;
are repeated for each column of the matrix (M).

4. Method according to any of the preceding claims, comprising the following steps:
selecting one column of the matrix (M);
calculating a relative error in the selected column for a plurality of starting points; wherein the relative error is calculated as an average of the minimums that are assigned to each starting point and to all the points shifted with respect to the starting point by an integer multiple of the selected scanning time;
selecting the starting point that has the lowest relative error.

5. Method according to claim 4, wherein the steps of:
calculating a relative error in the selected column for a plurality of starting points; wherein the relative error is calculated as an average of the minimums that are assigned to each starting point and to all the points shifted with respect to the starting point by an integer multiple of the selected scanning time;
selecting the starting point that has the lowest relative error;
are repeated for each column of the matrix (M).

6. Method according to any of the preceding claims, wherein
the receiver (12) comprises
a camera (6) having an image sensor (4), wherein
a light-sensitive area of the image sensor (4) comprises the row count (K) of rows having light-sensitive elements, wherein
the light-sensitive area of the image sensor (4) is scanned row by row at the row base frequency, and
an add-on element (3) which is in the form of a film and which is arranged such that light incident on the light-sensitive area of the image sensor (4) passes through the add-on element (3) first.

7. Method according to claim 6, wherein
the add-on element (3) has at least one lenticular region, wherein the lenticular region has an alternating material thickness.

8. Method according to claim 6, wherein
the add-on element (3) has a plurality of strip-shaped lenticular regions and a plurality of strip-shaped planar regions, wherein the lenticular regions have an alternating material thickness and the planar regions have a constant material thickness.

9. Method according to claim 8, wherein
the lenticular regions have recesses and a lower material thickness than the planar regions.

10. Method according to claim 8, wherein
the lenticular regions have bulges and a greater material thickness than the planar regions.

11. Light transmission system comprising
a transmitter (14), which has at least one controllable light source (1) that radiates a light signal (30) modulated in accordance with a predetermined data stream, and
a receiver (12) for receiving the light signal (30) emitted by the transmitter (14), wherein the system is operated using the method according to any of the preceding claims.

## Revendications

1. Procédé pour la détermination d'une fréquence d'échantillonage de lignes appropriée d'un récepteur (12) lors de la réception d'un signal lumineux (30) émis par un émetteur (14), dans lequel l'émetteur (14) émet le signal lumineux (30) avec une fréquence de commutation approximativement constante, et le récepteur (12) capture des images du signal lumineux (30) avec une fréquence de base des lignes constante, dans lequel deux lignes adjacentes d'une image sont capturées successivement avec un temps d'échantillonnage de base, dans lequel le temps d'échantillonnage de base est l'inverse de la fréquence de base des lignes ; comprenant les étapes suivantes :
Capturer un nombre d'images (N) d'images du signal lumineux (30) avec la fréquence de base des lignes, dans lequel chacune des images capturées présente un nombre de colonnes (J) identique de colonnes et un nombre de lignes (K) identique de lignes ;
Sélection d'une colonne de chacune des images capturées ;
Assemblage des colonnes sélectionnées en une matrice (M), qui présente le nombre d'images (N) de colonnes et le nombre de lignes (K) de lignes ;
Détermination d'un point de lumière maximale (Dmax) dans chaque ligne de la matrice (M) ;
Détermination d'un point de lumière minimale (Dmin) dans chaque ligne de la matrice (M) ;
Sélection d'une colonne de la matrice (M), dans lequel deux points adjacents dans la colonne sont décalés l'un par rapport à l'autre du temps d'échantillonnage de base ; pour chaque point de la colonne sélectionnée :
Détermination d'un écart supérieur de l'intensité lumineuse du point par rapport à l'intensité lumineuse maximale (Dmax) de la ligne correspondante ;
Détermination d'un écart inférieur de l'intensité lumineuse du point par rapport à l'intensité lumineuse minimale (Dmin) de la ligne correspondante ;
Détermination d'un minimum entre l'écart supérieur et l'écart inférieur ;
Association du minimum au point ;
Calcul d'une erreur relative dans la colonne sélectionnée pour plusieurs temps d'échantillonnage ;
chaque temps d'échantillonnage étant un multiple entier du temps d'échantillonnage de base ; dans lequel
dans la colonne sélectionnée, un point de départ est choisi ;
l'erreur relative est calculée comme la valeur moyenne des minima qui sont associés au point de départ et à tous les points décalés par rapport au point de départ d'un multiple entier du temps d'échantillonnage de base ;
Sélection du temps d'échantillonnage ayant la plus faible erreur relative, la fréquence d'échantillonage de lignes appropriée étant l'inverse du temps d'échantillonnage sélectionné.

2. Procédé selon la revendication 1, dans lequel la fréquence de base des lignes est supérieure à la fréquence de commutation, de préférence au moins deux fois supérieure, particulièrement de préférence au moins quatre fois supérieure.

3. Procédé selon l'une des revendications précédentes, dans lequel les étapes :
Sélection d'une colonne de la matrice (M) ;
pour chaque point de la colonne sélectionnée :
Détermination d'un écart supérieur de l'intensité lumineuse du point par rapport à l'intensité lumineuse maximale (Dmax) de la ligne correspondante ;
Détermination d'un écart inférieur de l'intensité lumineuse du point par rapport à l'intensité lumineuse minimale (Dmin) de la ligne correspondante ;
Détermination d'un minimum entre l'écart supérieur et l'écart inférieur ;
Association du minimum au point ;
Calcul d'une erreur relative dans la colonne sélectionnée pour plusieurs temps d'échantillonnage ; chaque temps d'échantillonnage étant un multiple entier du temps d'échantillonnage de base ; dans lequel l'erreur relative est calculée comme la valeur moyenne des minima qui sont associés à un point de départ et à tous les points décalés par rapport au point de départ d'un multiple entier du temps d'échantillonnage ;
sont répétées pour chaque colonne de la matrice (M).

4. Procédé selon l'une des revendications précédentes, comprenant les étapes suivantes :
Sélection d'une colonne de la matrice (M) ;
Calcul d'une erreur relative dans la colonne sélectionnée pour plusieurs points de départ ; l'erreur relative étant calculée comme la valeur moyenne des minima qui sont associés au point de départ respectif et à tous les points décalés par rapport au point de départ d'un multiple entier du temps d'échantillonnage sélectionné ;
Sélection du point de départ ayant la plus faible erreur relative.

5. Procédé selon la revendication 4, dans lequel les étapes :
Calcul d'une erreur relative dans la colonne sélectionnée pour plusieurs points de départ ; l'erreur relative étant calculée comme la valeur moyenne des minima qui sont associés au point de départ respectif et à tous les points décalés par rapport au point de départ d'un multiple entier du temps d'échantillonnage sélectionné ;
Sélection du point de départ ayant la plus faible erreur relative ;
sont répétées pour chaque colonne de la matrice (M).

6. Procédé selon l'une des revendications précédentes, dans lequel le récepteur (12) comprend une caméra (6), qui présente un capteur d'image (4), dans lequel une surface photosensible du capteur d'image (4) comprend le nombre de lignes (K) de lignes avec des éléments photosensibles, dans lequel la surface photosensible du capteur d'image (4) est échantillonnée ligne par ligne avec la fréquence de base des lignes, et un élément d'adjonction (3), qui est réalisé sous forme de feuille, et qui est disposé de telle sorte que la lumière atteignant la surface photosensible du capteur d'image (4) traverse d'abord l'élément d'adjonction (3), est compris.

7. Procédé selon la revendication 6, dans lequel l'élément d'adjonction (3) présente au moins une zone lenticulaire, dans lequel la zone lenticulaire présente une épaisseur de matériau alternante.

8. Procédé selon la revendication 6, dans lequel l'élément d'adjonction (3) présente une pluralité de zones lenticulaires en forme de bande et une pluralité de zones planes en forme de bande, dans lequel les zones lenticulaires présentent une épaisseur de matériau alternante, et les zones planes présentent une épaisseur de matériau constante.

9. Procédé selon la revendication 8, dans lequel les zones lenticulaires présentent des creux et une épaisseur de matériau inférieure à celle des zones planes.

10. Procédé selon la revendication 8, dans lequel les zones lenticulaires présentent des reliefs et une épaisseur de matériau supérieure à celle des zones planes.

11. Système pour la transmission lumineuse, comprenant un émetteur (14), qui présente au moins une source lumineuse contrôlable (1), qui émet un signal lumineux (30) modulé conformément à un flux de données prédéfini, et un récepteur (12) pour la réception du signal lumineux (30) émis par l'émetteur (14), dans lequel le système est exploité avec le procédé selon l'une des revendications précédentes.
